(19) Europäisches Patentamt
European Patent Office
Office européen des brevets

(11) Veröffentlichungsnummer: **0 429 892 A2**

(12) **EUROPÄISCHE PATENTANMELDUNG**

(21) Anmeldenummer: **90121168.0**

(22) Anmeldetag: **06.11.90**

(51) Int. Cl.5: **C08G 65/32**, C08L 71/02, C08G 18/50, B01D 17/05

(30) Priorität: **16.11.89 DE 3938061**

(43) Veröffentlichungstag der Anmeldung: **05.06.91 Patentblatt 91/23**

(84) Benannte Vertragsstaaten: **DE FR GB NL Patentblatt**

(71) Anmelder: **BAYER AG**
**W-5090 Leverkusen 1 Bayerwerk(DE)**

(72) Erfinder: **Brandt, Heinz-Dieter, Dr.**
**Buschstrasse 169**
**W-4150 Krefeld 1(DE)**
Erfinder: **Augustin, Thomas Dr.**
**Ritterstrasse 59**
**W-5000 Köln 1(DE)**
Erfinder: **Haese, Wilfried, Dr.**
**Hauweg 32**
**W- 4050 Mönchengladbach(DE)**
Erfinder: **Schäfer, Walter, Dr.**
**In den Weiden 25**
**W-5653 Leichlingen(DE)**

(54) **Verknüpfte, aminmodifizierte Polyalkylenoxide, deren Herstellung und deren Verwendung als Emulsionsspalter.**

(57) Die vorliegende Erfindung betrifft neue, verknüpfte und aminmodifizierte Polyalkylenoxide, der Formel (I)

$$\begin{array}{l} NH\text{-}CHR\text{-}(CH_2)_x\text{-}CHR\left[OCHR\text{-}(CH_2)_x\text{-}CHR\right]\text{-}(OCHR\text{-}CHR)_y\text{-}O\text{-}Q\text{-}A \\ | \\ M \qquad\qquad\qquad\qquad\qquad\qquad\qquad\qquad\qquad\qquad\qquad (I), \\ | \\ NH\text{-}CHR\text{-}(CH_2)_x\text{-}CHR\left[OCHR\text{-}(CH_2)_x\text{-}CHR\right]\text{-}(OCHR\text{-}CHR)_y\text{-}O\text{-}Q\text{-}A \end{array}$$

deren Herstellung aus Aminopolyethern der Formel (III)

$NH_2\text{-}CHR\text{-}(CH_2)_x\text{-}CHR\{OCHR\text{-}(CH_2)_x\text{-}CHR\}(OCHR\text{-}CHR)_y\text{-}O\text{-}Q\text{-}A$ (III),

und einem Diisocyanat, einem Bisepoxid, einer Dicarbonsäure, einem Dicarbonsäuredihalogenid, einem Biscarbonsäureanhydrid, einem Diester oder einer Dihalogenverbindung und deren Verwendung als Emulsionsspalter.

Die in den Formeln (I) und (III) verwendeten Symbole haben die in der Beschreibung angegebene Bedeutung.

EP 0 429 892 A2

# VERKNÜPFTE, AMINMODIFIZIERTE POLYALKYLENOXIDE, DEREN HERSTELLUNG UND DEREN VERWENDUNG ALS EMULSIONSSPALTER

Die vorliegende Erfindung betrifft neue, verknüpfte und aminmodifizierte Polyalkylenoxide, ein Verfahren zu ihrer Herstellung und ihre Verwendung als Emulsionsspalter, insbesondere als Spalter für Wasser-in-Öl-Emulsionen.

Erdöl wird zum überwiegenden Teil in Form wäßriger Emulsionen, meist in Form von Wasser-in-Öl-Emulsionen gefördert. Diese werden im allgemeinen durch Inhaltstoffe des Erdöls und durch mitgeführte feinstteilige Feststoffe aus der Lagerstätte stabilisiert. In dem einemulgierten Wasser sind häufig Salze, z.B. Natriumchlorid, Kalziumchlorid und/oder Magnesiumchlorid, gelöst. Transportkosten, Probleme infolge hoher Viskositäten der Emulsionen und Korrosionsprobleme in den Verarbeitungsanlagen machen es erforderlich, das Rohöl vor seinem Transport und/oder vor seiner Verarbeitung weitgehend zu entwässern, d.h. die aus der Lagerstätte geförderte Emulsion zu spalten.

Solche häufig sehr stabilen Emulsionen werden im allgemeinen gespalten durch den Zusatz von grenzflächenaktiven Verbindungen, sogenannten Demulgatoren oder Emulsionsspaltern. Häufig wird die Spaltung zusätzlich unterstützt durch Erwärmen und/oder Anlegen eines elektrischen Feldes.

Maßgebend für die Wirksamkeit von Emulsionsspaltern sind der Restwasser-, der Salz- und der Feststoffgehalt im abgetrennten Rohöl und der Restölgehalt im abgetrennten Wasser. Angestrebt wird eine Minimierung dieser Werte bei gleichzeitiger Minimierung der Anwendungskonzentration, der Einwirkungsdauer und der Anwendungstemperatur des Emulsionsspalters.

Die bisher verwendeten Emulsionsspalter, z.B. Blockpolymere aus Ethylenoxid und/oder 1,2-Propylenoxid (siehe US-PS 2 964 478), oxalkylierte Phenolharze (siehe US-PS 2 499 368 und 2 499 370) und mit Diisocyanaten, Dicarbonsäuren, Formaldehyd und/oder Diglycidylethern vernetzte Block- oder Mischpolymere von Ethylen- und 1,2-Propylenoxid (siehe EP-OS 55 433 und 55 434 und US-PS 4 029 708) erfüllen die Anforderungen im allgemeinen nur teilweise. So verläuft die Emulsionsspaltung häufig langsam und/oder unvollständig, wenn die Temperaturen nicht relativ hoch sind. Bekannte Emulsionsspalter sind auch nur bei speziellen Emulsionen gut wirksam, nicht allgemein einsetzbar und häufig erst in relativ hohen Dosierungen ausreichend wirksam.

In der US-PS 4 384 977 (entspricht DE-OS 3 214 145) werden einige Typen nicht verknüpfter stickstoffhaltiger Polyalkylenoxide als Emulsionsspalter beschrieben. Bei diesen ist nachteilig, daß sie offenbar wegen der fehlenden Verknüpfung deutlich weniger wirksam sind als erfindungsgemäße Verbindungen.

Es wurden nun neue, verknüpfte und aminmodifizierte Polyalkylenoxide der allgemeinen Formel (I) gefunden

$$\begin{array}{l} NH\text{-}CHR\text{-}(CH_2)_x\text{-}CHR\left[OCHR\text{-}(CH_2)_x\text{-}CHR\right]\text{-}(OCHR\text{-}CHR)_y\text{-}O\text{-}Q\text{-}A \\ | \\ M \\ | \\ NH\text{-}CHR\text{-}(CH_2)_x\text{-}CHR\left[OCHR\text{-}(CH_2)_x\text{-}CHR\right]\text{-}(OCHR\text{-}CHR)_y\text{-}O\text{-}Q\text{-}A \end{array} \qquad (I),$$

in der

jedes R unabhängig voneinander Wasserstoff oder einen $C_1$- bis $C_{20}$-Alkylrest,

jedes x unabhängig voneinander Null oder eine ganze Zahl von 1 bis 12,

jedes y unabhängig voneinander Null oder eine ganze Zahl von 1 bis 120,

jedes Q unabhängig voneinander eine $C_6$- bis $C_{18}$-Arylen-, $C_7$- bis $C_{18}$-Aralkylen- oder $C_2$- bis $C_{18}$-Alkylengruppe,

jedes A unabhängig voneinander Wasserstoff, Hydroxyl oder einen Rest der Formel (II)

$$-(OCHR-CHR)_y-\left[OCHR-(CH_2)_x-CHR\right]_y-OCHR-(CH_2)_x-CHR-NH_2 \qquad (II),$$

mit R, x und y wie oben angegeben und
M den Rest eines Diisocyanats, eines Bisepoxids, einer Dicarbonsäure, eines Dicarbonsäuredihalogenids, eines Biscarbonsäureanhydrid, eines Diesters oder einer Dihalogenverbindung bedeutet, nachdem jeweils beide reaktive Gruppen mit je einem aminischen Wasserstoffatom reagiert haben.

Bevorzugt sind verknüpfte, aminmodifizierte Polyalkylenoxide der Formel (I), bei denen
jedes R unabhängig voneinander Wasserstoff oder einen $C_1$- bis $C_4$-Alkylrest und/oder
jedes x unabhängig voneinander Null oder eine ganze Zahl von 1 bis 5 und/oder
jedes y unabhängig voneinander Null oder eine ganze Zahl von 1 bis 80 und/oder
jedes Q unabhängig voneinander eine $C_6$- bis $C_{10}$-Arylen-, $C_7$- bis $C_{12}$-Aralkylen- oder $C_2$- bis $C_{10}$-Alkylengruppe und/oder
jedes A unabhängig voneinander Wasserstoff, Hydroxyl oder einen Rest der Formel (II) mit R = H oder $C_1$- bis $C_4$-Alkyl, x = Null oder 1 bis 5 und y = Null oder 1 bis 80 und/oder
M den Rest eines Diisocyanats, eines Bisepoxids, einer Dicarbonsäure, eines Dicarbonsäuredihalogenides oder eines Biscarbonsäureanhydrids bedeutet, nachdem jeweils beide reaktive Gruppen mit einem aminischen Wasserstoffatom reagiert haben.

Besonders bevorzugt sind verknüpfte, aminmodifizierte Polyalkylenoxide der Formel (I), bei denen
jedes R unabhängig voneinander Wasserstoff oder einen $C_1$- bis $C_4$-Alkylrest und
jedes x unabhängig voneinander Null oder eine ganze Zahl von 1 bis 4 und
jedes y unabhängig voneinander Null oder eine ganze Zahl von 1 bis 70 und
jedes Q unabhängig voneinander eine $C_6$- bis $C_{10}$-Arylen-, $C_7$- bis $C_{12}$-Aralkylen- oder $C_2$- bis $C_{10}$-Alkylengruppe und
jedes A unabhängig voneinander Wasserstoff, Hydroxyl oder einen Rest der Formel (II) mit R = H oder $C_1$- bis $C_4$-Alkyl, x = Null oder 1 bis 4 und y = Null oder 1 bis 70 und
M den Rest eines Diisocyanats, eines Bisepoxids, einer Dicarbonsäure, eines Dicarbonsäuredihalogenides oder eines Biscarbonsäureanhydrids bedeutet, nachdem jeweils beide reaktive Gruppen mit einem aminischen Wasserstoffatom reagiert haben.

Die in der Formel (I) angegebenen, sich gegebenenfalls wiederkehrenden Einheiten können, falls sie untereinander verschieden sind, in aus gleichen Einheiten aufgebauten Blöcken, teilweise in aus gleichen Einheiten aufgebauten Blöcken und teilweise statistisch verteilt und nur statistisch verteilt angeordnet sein.

Erfindungsgemäße verknüpfte und aminmodifizierte Polyalkylenoxide können beispielsweise durch Umsetzung von Aminopolyethern der Formel (III)

$NH_2-CHR-(CH_2)_x-CHR\{OCHR-(CH_2)_x-CHR\}(OCHR-CHR)_y-O-Q-A$ (III),

in der die verwendeten Symbole die bei Formel (I) angegebene Bedeutung haben,
mit einem Diisocyanat, einem Bisepoxid, einer Dicarbonsäure, einem Dicarbonsäuredihalogenid, einem Biscarbonsäureanhydrid, einem Diester oder einer Dihalogenverbindung erhalten werden.

Vorzugsweise erfolgt die Umsetzung eines Aminopolyethers der Formel (III) mit einem Diisocyanat, einem Bisepoxid, einer Dicarbonsäure, einem Dicarbonsäuredihalogenid oder einem Biscarbonsäureanhydrid.

Für die Umsetzung eines Aminopolyethers der Formel (III) mit einer der genannten bifunktionellen Verbindungen sind beispielsweise Temperaturen im Bereich 0 bis 140 °C anwendbar.

Die zur Umsetzung mit einem Aminopolyether der Formel (III) vorgesehenen bifunktionellen Verbindungen müssen nicht in strengem Sinne bifunktionell sein. Es können dabei auch tri- oder polyfunktionelle Verbindungen, beispielsweise Triisocyanate eingesetzt werden. Es ist dann dabei allerdings darauf zu achten, daß die Mengen an Aminopolyether der Formel (III) und der tri- oder polyfunktionellen Verbindung so gewählt werden, daß die über die Zahl 2 hinausgehenden funktionellen Gruppen nicht mit dem Aminopolyether reagieren.

Geeignete Di- und Polyisocyanate können aliphatisch, cycloaliphatisch oder aromatisch sein. Beispielsweise kann es sich dabei handeln um: Hexamethylendiisocyanat, Cyclohexan-1,4-diisocyanat, 2,4- und 2,6-Toluylendiisocyanat und deren Gemische, 1-isocyanatomethyl-5-isocyanato-1,3,3-trimethylcyclohexan, 2,2,4- und 2,4,4-Trimethylhexamethylendiisocyanat-1,6, 1,5-Naphthalindiisocyanat, 1,3-Cyclopentyldiisocyanat, m- und p-Phenylendiisocyanat, 2,4,6-Toluylentriisocyanat, 4,4′,4″-Triphenylmethantriisocyanat, 1,3- und 1,4-Xylylendiisocyanat, 3,3′-Dimethyl-4,4′-biphenylendiisocyanat, Duren diisocyanat, 1-Phenoxy-2,4′-phenylendiisocyanat, 1-tert.-Butyl-2,4-phenylendiisocyanat, Methylen-bis-4,4′-cyclohexyldiisocyanat, 1-Chlor-2,4-phenylendiisocyanat und 4,4′-Diphenyletherdiisocyanat.

Es ist auch möglich höhermolekulare Di- und Polyisocyanate einzusetzen, die aus niedermolekularen Grundkörpern durch Polymerisationsreaktionen zu Uretdion oder Isocyanuratderivaten umgesetzt worden sind. Als Beispiele seien genannt: das Uretdion aus 2 Mol 2,4-Toluylendiisocyanat, die isocyanurathaltigen Polymerisationsprodukte aus 2,4- und 2,6-Toluylendiisocyanat oder Hexamethylen-diisocyanat, durchschnittlich zwei Isocyanuratringe im Molekül enthaltende und aus 5 Molen Toluylendiisocyanat gebildete Systeme und ein entsprechendes Derivat aus durchschnittlich 2 Mol Toluylendiisocyanat und 3 Mol Hexamethylendiisocyanat.

Es können auch biuretverknüpfte Di- oder Polyisocyanate eingesetzt werden, wie sie durch partielle Hydrolyse über die Stufe der Carbamidsäure und des Amins erhalten werden können, beispielsweise eine biuretverknüpfte Verbindung, die formal aus 3 Mol Hexamethylendiisocyanat unter Zusatz von 1 Mol Wasser und Abspaltung von 1 Mol Kohlendioxid erhältlich ist.

Andere geeignete Di- und Polyisocyanate kann man erhalten bei der Umsetzung von Di- und/oder Polyolen mit Di-und/oder Polyisocyanaten, wenn das Molverhältnis von Hydroxyverbindung zu Isocyanat so gewählt wird, daß bei den statistisch gebildeten Reaktionsprodukten stets Isocyanatfunktionen vorhanden bleiben und ein Molgewicht von 3000 nicht überschritten wird. Bei den Di- und/oder Polyolen kann es sich auch um hydroxylgruppenhaltige Polyester handeln. Sonstige geeignete Di- und Polyole sind beispielsweise Mono- und Polyethylenglykol, Propandiole, Butandiole, Neopentylglykol, andere Pentandiole, Adipol, Hexandiol, Cyclohexandiole, 1,4-Dihydroxymethylcyclohexan, Perhydrobisphenol-A, Glycerin, Trimethylolethan, Trimethylolpropan, andere Hexantriole und Pentaerythrit. Bevorzugt sind Umsetzungsprodukte von Di- und/oder Polyolen mit Toluylendiisocyanat, bei denen pro Hydroxylfunktion 1 Mol des Diisocyanats zur Reaktion gekommen ist. Bevorzugt ist der Einsatz von Diisocyanaten, insbesondere der Einsatz von Hexamethylendiisocyanat, Isophorondiisocyanat, Toluylendiisocyanat und Diphenylmethandiisocyanat.

Zur Verknüpfung mit Aminopolyethern der Formel (III) geeignete Bisepoxide können aliphatisch, cycloaliphatisch oder aromatisch sein. Die Herstellung geeigneter Bisepoxide kann nach literaturbekannten Methoden erfolgen (siehe z.B. Houben-Weyl, Methoden der Organischen Chemie, Band VI/3, Seiten 371 bis 443, 4. Auflage (1965)). Im Prinzip sind alle bekannten Bisepoxide zu verwenden. Bevorzugt sind Bisepoxide, die durch die Umsetzung von Bisphenolen, hydrierten Bisphenolen, aromatischen Dicarbonsäuren, hydrierten aromatischen Dicarbonsäuren oder aromatischen Aminen mit Epichlorhydrin unter anschließender Dehydrochlorierung zugänglich sind (siehe Houben-Weyl, Methoden der Organischen Chemie, Band XIV/2, Seiten 468 bis 475 und Seite 538, 4. Auflage (1963)).

Zur Verknüpfung mit Aminopolyethern der Formel (III) geeignete Bisanhydride können aromatisch oder cycloaliphatisch sein. Die Herstellung solcher Bisanhydride kann analog zur Herstellung von Monoanhydriden erfolgen, wie sie beispielsweise in Houben-Weyl, Methoden der Organischen Chemie, Band E15, Seiten 633 bis 652, 4. Auflage (1985) beschrieben ist. Im Prinzip sind alle bekannten Dianhydride zu verwenden. Bevorzugt werden Pyromellithsäureanhydride und Hexahydropyromellithsäureanhydride eingesetzt.

Die Verknüpfung von Aminopolyethern der Formel (III) mit Dicarbonsäuredihalogeniden kann beispielsweise mit aliphatischen, cycloaliphatischen und aromatischen Dicarbonsäuredihalogeniden durchgeführt werden. Solche können analog zu der Herstellung von Monocarbonsäurehalogeniden erhalten werden, wie es beispielsweise in Houben-Weyl, Methoden der Organischen Chemie, Band E15, Seiten 587 bis 609, 4. Auflage (1985) beschrieben ist. Im Prinzip können alle bekannten Dicarbonsäuredihalogenide, wie Dicarbonsäuredifluoride, -dichloride, -dibromide und/oder -diiodide verwendet werden. Bevorzugt ist die Verwendung von Dicarbonsäuredichloriden und Dicarbonsäuredibromiden. Als Beispiele für bevorzugte Dicarbonsäuredihalogenide seien die Dichloride und Dibromide folgender Dicarbonsäuren genannt: Phthalsäure, Terephthalsäure, Cyclohexan-1,4-dicarbonsäure, Oxalsäure, Glutarsäure, Bernsteinsäure, Adipinsäure und Sebacinsäure.

Die zur Herstellung der erfindungsgemäßen verknüpften, aminmodifizierten Polyalkylenoxide benötigten Aminopolyether der Formel (III) kann man beispielsweise durch Aminierung von Polyethern erhalten. Entsprechende Polyether kann man durch Polyoxyalkylierung niedriger Alkohole erhalten, beispielsweise Methanol, Ethanol, Propanolen, Butanolen, Pentanolen, Hexanolen, Aminoethanolen, Phenolen, Nonylphenolen, 2,2-Bis-(4-hydroxyphenyl)propan, Aminoalkoholen oder Phenolen mit Alkylenoxiden, insbesondere Ethylen- und/oder Propylenoxid. Geeignete Polyether kann man auch durch Polymerisation höherer aliphatischer, cyclischer Ether erhalten. Wenn bei der Herstellung von Polyethern verschiedene Alkylenoxide zum Einsatz kommen, kann es sich um Blockpolymere oder um Polymere mit statistischer Verteilung der verschiedenen Oxyalkylgruppen handeln (sogenannte Mischpolymere), oder auch um Mischformen aus Blockpolymeren und Polymeren statistischer Verteilung. Bevorzugt sind Mischpolymere und Produkte, bei

denen die Alkohole mit Ethylenoxid und Propylenoxid umgesetzt worden sind, wobei zunächst eine Mischung aus Propylenoxid und 80 bis 90 % der gesamten Menge des Ethylenoxids zu einem Mischpolymeren umgesetzt wird und hierauf die restlichen 10 bis 20 % des Ethylenoxids eingebracht werden, so daß die Endgruppen solcher Polyether nahezu vollständig primäre Hydroxylgruppen sind. Bevorzugte Polyether enthalten 40 bis 60 Gew.-% Ethylenoxid, besonders bevorzugte sind aus gleichen Gewichtsmengen Ethylen- und Propylenoxid aufgebaut. Bevorzugt sind dabei Polyether mit Molekulargewichten im Bereich 600 bis 5000, besonders bevorzugt solche mit Molekulargewichten im Bereich 700 bis 3000.

Außer Ethylenoxid und Propylenoxid sind als Alkylenoxide zur Herstellung von Polyethern auch 1,2- und 2,3-Epoxibutan, Dodecyloxid und Stearyloxid bevorzugt.

Die Polyether lassen sich nach bekannten Verfahren in die entsprechenden Aminopolyether der Formel (III) überführen. Ein geeignetes Verfahren ist z.B. die sogenannte reduktive Aminierung von Hydroxypolyethern unter Einwirkung von Ammoniak unter Druck bei Temperaturen von über 120 °C und in Anwesenheit von Wasserstoff und Raney-Nickel als Katalysator (siehe z.B. DE-AS 1 215 373). Ein anderes Verfahren zur Herstellung von Aminopolyethern der Formel (III) besteht darin, daß man Polyether einer Cyanethylierung unterwirft und anschließend die Nitrilgruppen katalytisch zum Amin reduziert (siehe z.B. DE-OS 2 832 759). Auch durch die Überführung von im Polyether befindlichen Hydroxylgruppen in gute Abgangsgruppen, beispielsweise in entsprechende Tosylate, und anschließende Substitution durch ein Amin sind Aminopolyether zugänglich. Dieses Reaktionsprinzip ist beispielsweise beschrieben in der US-PS 3 236 895.

Die Umsetzung von Aminopolyethern mit Diisocyanaten zu den erfindungsgemäßen Verbindungen der Formel (I) kann man beispielsweise in Substanz oder in Lösung durchführen. Bevorzugt ist die Gegenwart inerter Lösungsmittel wie Benzol, Toluol, Xylol, Chlorbenzol, o-Dichlorbenzol, Aceton oder Essigester. Geeignete Umsetzungstemperaturen sind beispielsweise solche zwischen 0 und 140 °C. Man kann dabei so verfahren, daß man zu vorgelegtem Aminopolyether das Diisocyanat hinzufügt oder umgekehrt zu vorgelegtem Diisocyanat den Aminopolyether zufügt. Vorzugsweise wird so verfahren, daß man den Aminopolyether und das Diisocyanat gleichzeitig in eine große Menge Lösungsmittel eintropfen läßt. Diese Arbeitsweise hat sich insbesondere bei der Herstellung unlöslicher Verbindungen der Formel (I) bewährt.

Auch die Umsetzung von Aminopolyethern mit Bisepoxiden, Biscarbonsäureanhydriden oder Dicarbonsäuredihalogeniden kann in Substanz oder in Lösung erfolgen. Bevorzugt ist die Gegenwart von Lösungsmitteln wie Benzol, Toluol, Xylol, Chlorbenzol, o-Dichlorbenzol, Aceton, Acetonitril oder Methylenchlorid. Geeignet sind beispielsweise Reaktionstemperaturen zwischen 0 und 140 °C. Die Zugabe der Reaktionspartner kann auch hier in beliebiger Reihenfolge erfolgen und auch hier wird vorzugsweise so verfahren, daß man den Aminopolyether und den anderen Reaktionspartner gleichzeitig in eine größere Menge Lösungsmittel hineintropfen läßt.

Die vorliegende Erfindung betrifft auch die Verwendung von verknüpften und aminmodifizierten Polyalkylenoxiden der Formel (I) zur Spaltung von Wasser-in-Öl-Emulsionen, insbesondere von Wasser-in-Rohöl-Emulsionen. Im allgemeinen kann man hier die Stoffe der Formel (I) in Mengen von 10 bis 500 ppm, bezogen auf die jeweilige Wasser-in-Öl-Emulsion zusetzen. In vielen Fällen wirken die Stoffe der Formel (I) schon dann als Emulsionsspalter, wenn man sie in Mengen von 10 bis 50 ppm, bezogen auf die jeweilige Wasser-in-Öl-Emulsion, einsetzt. Im allgemeinen entfalten die Verbindungen der Formel (I) ihre Wirkung als Emulsionsspalter ab 30 °C, wobei Wasser-in-Öl-Emulsionen entweder schneller oder bei gleicher Einwirkungszeit vollständiger gespalten werden als mit bekannten Emulsionsspaltern. Die erfindungsgemäßen Emulsionsspalter sind außerdem vielseitig anwendbar, beispielsweise auch auf die nach der Spaltung einer Öl-in-Wasser-Emulsion vorliegende ölige Phase, die häufig noch Wasser enthält.

Bei der Verwendung als Emulsionsspalter für Wasser-in-Öl-Emulsionen können die Verbindungen der Formel (I) als solche eingesetzt werden. Man kann sie auch in Form von Lösungen einsetzen, beispielsweise in 10 bis 70 gew.-%igen Lösungen in Alkylaromaten, wie Xylol.

## Beispiele

### Beispiel 1

In eine Lösung von 10 g Aminopolyether, der erhalten worden ist als Aminierungsprodukt von Polytetrahydrofuran mit einer OH-Zahl von 112, und 2 Tropfen Bortrifluorid-Etherat-Lösung (5 %ig in Toluol) in 6 g Toluol wurden 0,9 g eines aus Bisphenol A und 2 Molen Epichlorhydrin erhaltenen Bisepoxids zusammen mit 5 g Toluol eingegeben und 30 Minuten bei Raumtemperatur verrührt. Anschließend wurde noch 3 Stunden auf 80 °C erwärmt und dann abgekühlt. Es wurde eine schwach gelbe Flüssigkeit erhalten.

### Beispiel 2

Zu 51,6 g Toluol wurden gleichzeitig und mit gleicher Geschwindigkeit bei 0 bis 5 °C 2 Lösungen zugetropft, nämlich Lösung 1 bestehend aus 0,035 g Toluylendiisocyanat in 22 g Toluol und Lösung 2 bestehend aus 7,6 g Aminopolyether (Aminierungsprodukt von auf Trimethylolpropan gestartetem Polypropylenoxid mit einer OH-Zahl von 32) in 68,4 g Toluol. Anschließend wurde 2 Stunden bei Raumtemperatur nachreagieren gelassen. Es wurde eine schwach gelbe Flüssigkeit erhalten.

Beispiel 3

In eine Lösung aus 38 g Aminopolyether (Aminierungsprodukt von auf Trimethylolpropan gestartetem Polypropylenoxid mit einer OH-Zahl von 32) in 30 g Toluol und 2 Tropfen Bortrifluorid-Etherat-Lösung (5 %ig in Toluol) wurden 1,82 g Bisepoxid erhalten aus Bisphenol A und 2 Molen Epichlorhydrin gelöst in 10 g Toluol hinzugefügt und 4 Stunden bei 70 °C nachreagieren gelassen. Dann wurde abgekühlt und eine schwach gelbe Flüssigkeit erhalten.

Beispiel 4

Zu 80 g Toluol wurden 2 verschiedene Lösungen getropft, nämlich Lösung 1 bestehend aus 0,435 g Toluylendiisocyanat in 10 g Toluol und Lösung 2 bestehend aus 10 g Aminopolyether (Aminierungsprodukt von Polytetrahydrofuran mit einer OH-Zahl von 56) in 10 g Toluol. Die Zugabe erfolgte gleichzeitig und mit gleicher Geschwindigkeit bei 0 bis 5 °C innerhalb von 30 Minuten. Anschließend wurde 2 Stunden bei Raumtemperatur nachgerührt. Es wurde eine hellgelbe Flüssigkeit erhalten.

Beispiel 5

Zu einer Lösung aus 475 g Aminopolyether (Aminierungsprodukt von auf Trimethylolpropan gestartetem Polypropylenoxid mit einer OH-Zahl von 32) in 10 g Acetonitril wurde bei 0 bis 5 °C eine Lösung von 0,27 g Pyromellithsäureanhydrid in 43,3 g Acetonitril zugetropft. Anschließend wurde bei 40 bis 45 °C 2 Stunden nachreagieren gelassen und noch eine weitere Stunde bei 60 bis 70 °C. Dann wurde abgekühlt und eine schwach gelbe Flüssigkeit erhalten.

Beispiel 6 (Emulsionsspaltungen)

Eine Rohöltestemulsion aus einem norddeutschen Rohöl mit einem Wassergehalt von 30 Vol.-% (synthetisches Formationswasser mit einer Salinität von 10,9 Gew.-%) wurde bei 40 °C mit den jeweils angegebenen Mengen Emulsionsspalter gespalten.

| Emulsionsspalter | Dosierung ppm | Spalterwirkung (Wasserabscheidung in %) 10' | 30' | 1h | 2h | 3h | 4h |
|---|---|---|---|---|---|---|---|
| a. Spalter {gemäß Stand | 20 | 3 | 14 | 24 | 27 | 30 | 33 |
| b. Spalter {der Technik | 20 | 17 | 33 | 33 | 36 | 54 | 61 |
| c. Produkt von Beispiel 1 | 20 | 48 | 63 | 67 | 67 | 94 | 96 |
| d. Produkt von Beispiel 2 | 20 | 64 | 66 | 68 | 69 | 87 | 89 |
| e. Produkt von Beispiel 3 | 20 | 17 | 33 | 39 | 44 | 64 | 67 |
| f. Produkt von Beispiel 4 | 20 | 36 | 52 | 54 | 61 | 72 | 73 |
| g. Produkt von Beispiel 5 | 20 | 17 | 21 | 23 | 28 | 60 | 67 |

Beispiel 7 (Emulsionsspaltungen)

Eine Rohöltestemulsion bestehend aus einem niederländischen Rohöl mit einem Wassergehalt von 51 Vol.-% (natürliches Formationswasser mit einer Salinität von 7,5 Gew.-%) wurde bei 60 °C mit der jeweils angegebenen Menge Emulsionsspaltern gespalten.

| Emulsionsspalter | Dosierung ppm | Spalterwirkung (Wasserabscheidung in %) | | | | | |
|---|---|---|---|---|---|---|---|
| | | 10' | 30' | 1h | 2h | 3h | 4h |
| a. Spalter {gemäß Stand | 30 | 9 | 46 | 48 | 51 | 52 | 56 |
| b. Spalter {der Technik | 30 | 1 | 4 | 25 | 34 | 41 | 47 |
| c. Produkt von Beispiel 1 | 30 | 37 | 60 | 62 | 63 | 91 | 93 |
| d. Produkt von Beispiel 2 | 30 | 40 | 42 | 42 | 43 | 61 | 64 |
| e. Produkt von Beispiel 3 | 30 | 11 | 23 | 31 | 33 | 57 | 59 |
| f. Produkt von Beispiel 4 | 30 | 24 | 41 | 41 | 56 | 71 | 73 |
| g. Produkt von Beispiel 5 | 30 | 21 | 36 | 49 | 50 | 54 | 58 |

## Ansprüche

1. Verknüpfte und aminmodifizierte Polyalkylenoxide der allgemeinen Formel (I)

$$\begin{array}{l} NH-CHR-(CH_2)_x-CHR\left[OCHR-(CH_2)_x-CHR\right]-(OCHR-CHR)_y-O-Q-A \\ | \\ M \\ | \\ NH-CHR-(CH_2)_x-CHR\left[OCHR-(CH_2)_x-CHR\right]-(OCHR-CHR)_y-O-Q-A \end{array} \quad (I),$$

in der
jedes R unabhängig voneinander Wasserstoff oder einen $C_1$- bis $C_{20}$-Alkylrest,
jedes x unabhängig voneinander Null oder eine ganze Zahl von 1 bis 12,
jedes y unabhängig voneinander Null oder eine ganze Zahl von 1 bis 120,
jedes Q unabhängig voneinander eine $C_6$- bis $C_{18}$-Arylen-, $C_7$- bis $C_{18}$-Aralkylen- oder $C_2$-bis $C_{18}$-Alkylengruppe,
jedes A unabhängig voneinander Wasserstoff, Hydroxyl oder einen Rest der Formel (II)

$$-(OCHR-CHR)_y-\left[OCHR-(CH_2)_x-CHR\right]_y-OCHR-(CH_2)_x-CHR-NH_2 \quad (II),$$

mit R, x und y wie oben angegeben und
M den Rest eines Diisocyanats, eines Bisepoxids, einer Dicarbonsäure, eines Dicarbonsäuredihalogenids, eines Biscarbonsäureanhydrid, eines Diesters oder einer Dihalogenverbindung bedeutet, nachdem jeweils

beide reaktive Gruppen mit je einem aminischen Wasserstoffatom reagiert haben.

2. Verknüpfte und aminmodifizierte Polyalkylenoxide nach Anspruch 1, dadurch gekennzeichnet, daß in Formel (I)
jedes R unabhängig voneinander Wasserstoff oder einen $C_1$- bis $C_4$-Alkylrest und/oder
jedes x unabhängig voneinander Null oder eine ganze Zahl von 1 bis 5 und/oder
jedes y unabhängig voneinander Null oder eine ganze Zahl von 1 bis 80 und/oder
jedes Q unabhängig voneinander eine $C_6$- bis $C_{10}$-Arylen-, $C_7$- bis $C_{12}$-Aralkylen- oder $C_2$-bis $C_{10}$-Alkylengruppe und/oder
jedes A unabhängig voneinander Wasserstoff, Hydroxyl oder einen Rest der Formel (II) mit R = H oder $C_1$- bis $C_4$-Alkyl, x = Null oder 1 bis 5 und y = Null oder 1 bis 80 und/oder
M den Rest eines Diisocyanats, eines Bisepoxids, einer Dicarbonsäure, eines Dicarbonsäuredihalogenides oder eines Biscarbonsäureanhydrids bedeutet, nachdem jeweils beide reaktive Gruppen mit einem aminischen Wasserstoffatom reagiert haben.

3. Verknüpfte und aminmodifizierte Polyalkylenoxide nach Ansprüchen 1 und 2, dadurch gekennzeichnet, daß in Formel (I)
jedes R unabhängig voneinander Wasserstoff oder einen $C_1$- bis $C_4$-Alkylrest und
jedes x unabhängig voneinander Null oder eine ganze Zahl von 1 bis 4 und
jedes y unabhängig voneinander Null oder eine ganze Zahl von 1 bis 70 und
jedes Q unabhängig voneinander eine $C_6$- bis $C_{10}$-Arylen-, $C_7$- bis $C_{12}$-Aralkylen- oder $C_2$-bis $C_{10}$-Alkylengruppe und
jedes A unabhängig voneinander Wasserstoff, Hydroxyl oder einen Rest der Formel (II) mit R = H oder $C_1$- bis $C_4$-Alkyl, x = Null oder 1 bis 4 und y = Null oder 1 bis 70 und
M den Rest eines Diisocyanats, eines Bisepoxids, einer Dicarbonsäure, eines Dicarbonsäuredihalogenides oder eines Biscarbonsäureanhydrids bedeutet, nachdem jeweils beide reaktive Gruppen mit einem aminischen Wasserstoffatom reagiert haben.

4. Verfahren zur Herstellung von verknüpften und aminmodifizierten Polyalkylenoxiden der Formel (I)

$$\begin{array}{l} NH\text{-}CHR\text{-}(CH_2)_x\text{-}CHR\left[OCHR\text{-}(CH_2)_x\text{-}CHR\right]\text{-}(OCHR\text{-}CHR)_y\text{-}O\text{-}Q\text{-}A \\ | \\ M \\ | \\ NH\text{-}CHR\text{-}(CH_2)_x\text{-}CHR\left[OCHR\text{-}(CH_2)_x\text{-}CHR\right]\text{-}(OCHR\text{-}CHR)_y\text{-}O\text{-}Q\text{-}A \end{array} \quad (I),$$

in der
jedes R unabhängig voneinander Wasserstoff oder einen $C_1$- bis $C_{20}$-Alkylrest,
jedes x unabhängig voneinander Null oder eine ganze Zahl von 1 bis 12,
jedes y unabhängig voneinander Null oder eine ganze Zahl von 1 bis 120,
jedes Q unabhängig voneinander eine $C_6$- bis $C_{18}$-Arylen-, $C_7$- bis $C_{18}$-Aralkylen- oder $C_2$-bis $C_{18}$-Alkylengruppe,
jedes A unabhängig voneinander Wasserstoff, Hydroxyl oder einen Rest der Formel (II)

$$-(OCHR\text{-}CHR)_y\text{-}\left[OCHR\text{-}(CH_2)_x\text{-}CHR\right]_y\text{-}OCHR\text{-}(CH_2)_x\text{-}CHR\text{-}NH_2 \quad (II),$$

mit R, x und y wie oben angegeben und
M den Rest eines Diisocyanats, eines Bisepoxids, einer Dicarbonsäure, eines Dicarbonsäuredihalogenids, eines Biscarbonsäureanhydrid, eines Diesters oder einer Dihalogenverbindung bedeutet, nachdem jeweils beide reaktive Gruppen mit je einem aminischen Wasserstoffatom reagiert haben, dadurch gekennzeichnet, daß man Aminopolyether der Formel (III)
$NH_2\text{-}CHR\text{-}(CH_2)_x\text{-}CHR\{OCHR\text{-}(CH_2)_x\text{-}CHR\}(OCHR\text{-}CHR)_y\text{-}O\text{-}Q\text{-}A$ (III),
in der die verwendeten Symbole die bei Formel (I) angegebene Bedeutung haben, mit einem Diisocyanat, einem Bisepoxid, einer Dicarbonsäure, einem Dicarbonsäuredihalogenid, einem Biscarbonsäureanhydrid,

einem Diester oder einer Dihalogenverbindung umsetzt.

5. Verfahren nach Anspruch 4, dadurch gekennzeichnet, daß man die Umsetzung mit einem Diisocyanat, einem Bisepoxid, einer Dicarbonsäure, einem Dicarbonsäuredihalogenid oder einem Biscarbonsäureanhydrid durchführt.

6. Verfahren nach Ansprüchen 4 und 5, dadurch gekennzeichnet, daß man die Umsetzung bei 0 bis 140 °C durchführt.

7. Verwendung von verknüpften und aminmodifizierten Polyalkylenoxiden der Formel (I)

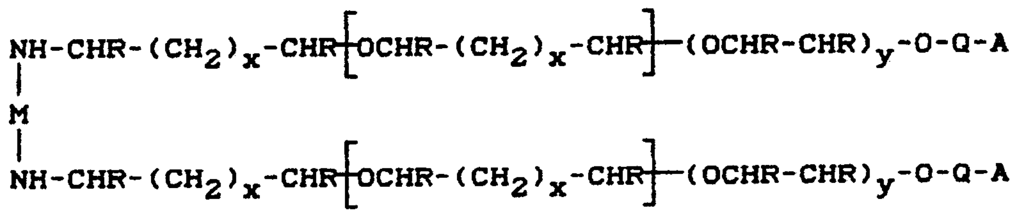

(I),

in der

jedes R unabhängig voneinander Wasserstoff oder einen $C_1$- bis $C_{20}$-Alkylrest,

jedes x unabhängig voneinander Null oder eine ganze Zahl von 1 bis 12,

jedes y unabhängig voneinander Null oder eine ganze Zahl von 1 bis 120,

jedes Q unabhängig voneinander eine $C_6$- bis $C_{18}$-Arylen-, $C_7$- bis $C_{18}$-Aralkylen- oder $C_2$-bis $C_{18}$-Alkylengruppe,

jedes A unabhängig voneinander Wasserstoff, Hydroxyl oder einen Rest der Formel (II)

$$-(OCHR-CHR)_y-\left[OCHR-(CH_2)_x-CHR\right]_y-OCHR-(CH_2)_x-CHR-NH_2 \quad (II),$$

mit R, x und y wie oben angegeben und

M den Rest eines Diisocyanats, eines Bisepoxids, einer Dicarbonsäure, eines Dicarbonsäuredihalogenids, eines Biscarbonsäureanhydrid, eines Diesters oder einer Dihalogenverbindung bedeutet, nachdem jeweils beide reaktive Gruppen mit je einem aminischen Wasserstoffatom reagiert haben,

zur Spaltung von Wasser-in-Öl-Emulsionen.

8. Verwendung nach Anspruch 7, dadurch gekennzeichnet, daß man 10 bis 500 ppm eines Stoffes der Formel (I), bezogen auf die jeweilige Wasser-in-Öl-Emulsion zusetzt.

9. Verwendung nach Ansprüchen 7 und 8, dadurch gekennzeichnet, daß man die ölige Phase spaltet, die nach der Spaltung einer Öl-in-Wasser-Emulsion vorliegt.

10. Verwendung nach Ansprüchen 7 bis 9, dadurch gekennzeichnet, daß man die Verbindungen der Formel (I) in Form von Lösungen einsetzt.